# EUROPEAN PATENT APPLICATION

(11) **EP 4 657 771 A1**
(43) Date of publication of application: **03.12.2025**
(21) Application number: 25178086.2
(22) Date of filing: 21.05.2025
(51) Int. Cl.: H04B 7/185, H04W 56/00

(54) **COMBINED TERRESTRIAL AND SATELLITE NETWORK**

(30) Priority: 30.05.2024 US 202463653998 P; 29.04.2025 US 202519193612
(71) Applicant: Hubble Network Inc, Seattle WA 98122 (US)
(72) Inventor: WILD, Ben Juda, Seattle, 98122 (US); BARTON, Robert, Seattle, 98122 (US); TKACHENKO, Art, Seattle, 98122 (US)
(74) Representative: Derry, Paul Stefan

(57) **Abstract**

Techniques for an endpoint device on Earth to communicate with both a terrestrial network and with a satellite network are described. By communicating with the terrestrial network, the endpoint device is able to determine its approximate location. Then, using ephemeris data for the satellite network, the endpoint device further determines when one or more satellites of the satellite network are likely to be overhead. The endpoint device then transmits information to the satellite network at the determined time. By leveraging the location information gathered from the terrestrial network, the endpoint device limits its transmissions to the satellite network to only those times when a satellite is likely to receive the transmissions, thereby conserving battery power and extending the lifespan for the endpoint device.

## Description

### CROSS-REFERENCE TO RELATED APPLICATION

This application is a continuation of U.S. Patent Application Serial No. 63/653,998, filed on May 30, 2024, the entire contents of which are hereby incorporated by reference as if fully set forth.

### BACKGROUND

A low-power wide-area network (LPWAN) is a type of wireless telecommunication wide area network designed to allow long-range communications at a low bit rate among connected devices, such as sensors operated on a battery. LPWAN devices may communicate with a satellite network to send and/or receive information in one or both of an uplink or a downlink direction.

### SUMMARY

A first aspect of the specification provides a computer-implemented method comprising:
transmitting, by an endpoint device, a beacon including an estimated position of the endpoint device and a timestamp corresponding to a time when the beacon is transmitted according to a clock of the endpoint device;
waiting, by the endpoint device, for a waiting interval after transmitting the beacon;
after the waiting interval, listening, by the endpoint device, for a listening interval, for a response to the beacon;
receiving, by a terrestrial network device, the beacon from the endpoint device;
comparing, by the terrestrial network device, the estimated position of the endpoint device contained in the beacon to a position of the terrestrial network device and comparing, by the terrestrial network device, the timestamp contained in the beacon to a time according to a clock of the terrestrial network device;
determining, by the terrestrial network device, that a first error in the estimated position of the endpoint device is greater than a first threshold value or a second error in the timestamp is greater than a second threshold value;
sending, by the terrestrial network device in response to determining that the first error is greater than the first threshold value or the second error is greater than the second threshold value, a response to the beacon with updated position and time information;
receiving, by the endpoint device, the response and updating the estimated position based on the updated position information and updating the clock of the endpoint device based on the updated time information; and
waiting, by the endpoint device, for a beacon interval and then transmitting, by the endpoint device, another beacon including another estimated position of the endpoint device and another timestamp corresponding to a time when the another beacon is transmitted according to the clock of the endpoint device.

The timestamp contained in the beacon may include an estimated error, and determining that the second error is greater than the second threshold value may include comparing the estimated error to the second threshold value.

The terrestrial network device may maintain a continuous network connection and the endpoint device may not maintain a continuous network connection.

A second aspect of the specification provides a computer-implemented method comprising:
transmitting, by an endpoint device, a beacon including an estimated position of the endpoint device and a timestamp corresponding to a time when the beacon is transmitted according to a clock of the endpoint device;
waiting, by the endpoint device, for a waiting interval after transmitting the beacon;
after the waiting interval, listening, by the endpoint device, for a listening interval, for a response to the beacon from a network device;
receiving, by the endpoint device, the response to the beacon from the network device, wherein the response includes updated position information and updated time information; and
updating, by the endpoint device, the estimated position based on the updated position information and updating the clock of the endpoint device based on the updated time information.

The method may further comprise waiting, by the endpoint device, for a beacon interval and then transmitting, by the endpoint device, another beacon including another estimated position of the endpoint device and another timestamp corresponding to a time when the another beacon is transmitted according to the clock of the endpoint device.

The updated position information may be based on a comparison made by the network device between the estimated position of the endpoint device contained in the beacon and a position of the network device.

The updated time information may be based on a comparison made by the network device between the timestamp contained in the beacon and a time according to a clock of the network device.

The updated time information may be based on a determination made by the network device that a first error in the estimated position of the endpoint device is greater than a first threshold value or a second error in the timestamp is greater than a second threshold value.

The timestamp contained in the beacon may include an estimated error.

The method may further comprise determining, by the endpoint device, based on the updated position information and the updated time information, and based on satellite ephemeris data, a time to transmit a message to a satellite network.

The method may further comprise waiting, by the endpoint device, until the time to transmit the message to the satellite network and then transmitting, by the endpoint device, the message to the satellite network.

The method may further comprise receiving, by the endpoint device, topographical information corresponding to the updated position information, and determining, by the endpoint device, the time to transmit the message to the satellite network may be further based on the topographical information.

Transmitting the message to the satellite network may comprise, transmitting, by the endpoint device, the message a plurality times including at a first time corresponding to when a satellite is expected to be overhead based on the updated position information of the endpoint device being accurate and at least one additional time corresponding to when a satellite is expected to be overhead based on the updated position information of the endpoint device being inaccurate by a threshold amount in one of two perpendicular directions, either positive or negative.

The beacon may be an identifier of the endpoint device.

The beacon may uses Bluetooth Low Energy (BLE) wireless personal area network technology.

A third aspect of the specification provides a computer-implemented method comprising:
receiving, by a network device, a beacon from an endpoint device, the beacon including an estimated position of the endpoint device and a timestamp corresponding to a time when the beacon was transmitted according to a clock of the endpoint device;
comparing, by the network device, the estimated position of the endpoint device contained in the beacon to a position of the network device and comparing, by the network device, the timestamp contained in the beacon to a time according to a clock of the network device;
determining, by the network device, that a first error in the estimated position of the endpoint device is greater than a first threshold value or a second error in the timestamp is greater than a second threshold value; and
sending, by the network device in response to determining that the first error is greater than the first threshold value or the second error is greater than the second threshold value, a response to the beacon with updated position and time information.

The timestamp contained in the beacon may include an estimated error.

Determining that the second error is greater than the second threshold value may include comparing the estimated error to the second threshold value.

The beacon may be an identifier of the endpoint device.

The beacon may use Bluetooth Low Energy (BLE) wireless personal area network technology.

### BRIEF DESCRIPTION OF DRAWINGS

Various examples in accordance with the present disclosure will be described with reference to the drawings, in which:
FIG. 1 is a schematic diagram illustrating communication among a wireless endpoint device on Earth, a terrestrial network, and a satellite network according to some embodiments;
FIG. 2 is a functional block diagram illustrating a wireless endpoint device according to some embodiments;
FIG. 3 is a flow diagram illustrating operations of a method for maintaining accurate location and time estimates for an endpoint device in communication with a terrestrial network and a satellite network according to some embodiments;
FIG. 4 is a diagram illustrating a technique for sending multiple instances of a same message from an endpoint device to a satellite according to some embodiments;
FIG. 5 is a flow diagram illustrating operations of a method for avoiding interference from other wireless devices when transmitting a message to a satellite network according to some embodiments;
FIG. 6 illustrates operations 600 of a method for avoiding physical obstructions when transmitting a message to a satellite network according to some embodiments; and
FIG. 7 is a block diagram illustrating an example computing device that can be used in some examples.

### DETAILED DESCRIPTION

The present disclosure relates to wireless communication networks, including terrestrial networks and satellite networks. Examples of such networks include, without limitation, personal-area networks (PANs) and low-power wide-area networks (LPWANs). A PAN is a computer network for interconnecting electronic devices in an individual person's workspace. A PAN provides data transmission among devices such as computers, smartphones, and tablets. PANs can be used for communication among the personal devices themselves, or for connecting to a higher-level network (e.g., the internet) where one master device acts as a gateway. A gateway is a piece of networking hardware or software used in telecommunications networks that allows data to flow from one discrete network to another. In some embodiments, a gateway device may maintain a continuous (or substantially continuous) connection to a network (e.g., WiFi or cellular). A PAN may be wireless or carried over wired interfaces such as USB. A wireless personal area network (WPAN) is a PAN carried over a low-powered, short-distance wireless network technology such as IrDA, Wireless USB, Bluetooth, Bluetooth Low Energy, NearLink, or Zigbee. The reach of a WPAN varies from a few centimeters to a few meters. WPANs specifically tailored for low-power operation of the sensors are sometimes also called low-power personal area networks (LPPANs) to better distinguish them from low-power wide-area networks (LPWANs).

According to some embodiments, an endpoint device on Earth (or in an aircraft) communicates with a terrestrial network and with a satellite network (e.g., an LPWAN satellite network). By communicating with the terrestrial network, the endpoint device is able to determine its approximate location. Then, using ephemeris data for the satellite network, the endpoint device further determines when one or more satellites of the satellite network are likely to be overhead. The endpoint device then transmits information to the satellite network at the determined time. By leveraging the location information gathered from the terrestrial network, the endpoint device limits its transmissions to the satellite network to only those times when a satellite is likely to receive the transmissions, thereby conserving battery power and extending the lifespan for the endpoint device.

An LPWAN is a type of wireless telecommunication wide area network designed to allow long-range communications at a low bit rate among connected devices, such as sensors operated on a battery. The low power, low bit rate, and intended use distinguish this type of network from a wireless WAN, which is designed to connect users or businesses, and carry more data, using more power. Typical LPWAN data rates range from 0.3 kbit/s to 50 kbit/s per channel. An LPWAN may be used to create a private wireless sensor network, but may also be a service or infrastructure offered by a third party, allowing the owners of sensors to deploy them in the field without investing in gateway technology.

Examples of LPWAN endpoint devices include sensors and trackers. For example, an LPWAN-connected sensor on an industrial machine may communicate information to the network about the machine's operating status, such as whether the machine needs maintenance. In another example, an LPWAN-connected tracker on a shipping container may communicate information to the network about the container's location and/or direction of movement.

LPWAN endpoint devices may communicate with their networks via ground-based links and/or via satellite links. For example, an LPWAN-connected tracker may communicate with a network of LPWAN satellites. Satellites in the LPWAN network may be in low Earth orbit (LEO), which is typically defined as an orbit around Earth with a period of 128 minutes or less (making at least 11.25 orbits per day) and an eccentricity less than 0.25. Satellites that are in LEO, or are in any type of orbit that is not geostationary, appear to a ground-based observer to be at different points in the sky at different times of the day (or night). That is, the satellites appear to move across the sky from the ground-based observer's point of view. For an LPWAN endpoint device on Earth, the shortest communication path between the endpoint device and a satellite in the LPWAN network is typically when the satellite is passing directly overhead of the endpoint device. Because signal strength decreases with distance from the transmitter, it is advantageous for the endpoint device to limit its transmissions to the satellite network to only those times when a satellite is directly overhead, so that the endpoint device can limit its transmit power to the lowest possible level that still enables the satellite to receive the transmission. Any increase in transmit power from the endpoint device increases the drain on the device's battery, which in turn shortens the usable lifespan of the endpoint device (at least until the drained battery can be recharged or replaced).

To determine these advantageous communication times (when there is a satellite in the LPWAN satellite constellation directly overhead), in some embodiments the endpoint device leverages satellite ephemeris data. For example, satellites in the LPWAN satellite constellation may transmit information about their location (e.g., current and predicted), timing, and health via what is known as ephemeris data. The ephemeris data is used according to some of the present embodiments to determine future satellite conditions (for a given place and time), providing a tool for planning when (or when not) to schedule data transmission from the endpoint device to the LPWAN satellite network. In some embodiments, such as where the satellites perform absolute station keeping, this ephemeris data may be loaded into memory (or storage) of the endpoint device at the time the endpoint device is provisioned. In other embodiments, such as where the satellites do not perform absolute station keeping, updated ephemeris data may be transmitted to the endpoint device periodically from a satellite, and/or from a ground station, and/or from a ground-based device in the terrestrial network. In such embodiments, the ephemeris data may also be loaded into memory (or storage) of the endpoint device at the time the endpoint device is provisioned, but the ephemeris data is also transmitted to the endpoint device at later times as satellite drift necessitates that the ephemeris data be updated.

A difficulty arises, though, when the endpoint device doesn't have reliable information about its current location. For example, a sensor on a mobile machine, or a tracker on a shipping container, may move about. Without reliable information about current location, the endpoint device can't determine advantageous times to transmit data to the LPWAN satellite network, because the endpoint device can't determine when a satellite might be directly overhead of its current (unknown) location.

Another potential difficulty arises from directional characteristics of the endpoint device's antenna(s). For example, a PCB (printed circuit board) trace antenna has beam nulls in two opposite directions and stronger beams in the other directions. Thus, the orientation of the antenna can cause the antenna to have a stronger radio beam toward certain regions of the sky, making it more reliable to communicate with satellites as they pass through those same regions of the sky.

Some of the present embodiments solve these technical problems by leveraging information from a terrestrial network to determine the current location for the endpoint device. The information obtained by communicating with the terrestrial network is then used to determine advantageous times to transmit data to the LPWAN satellite network. For example, the endpoint device receives ephemeris data for the LPWAN satellite constellation. The ephemeris data may be received from one or more satellites in the satellite constellation, and/or from one or more ground-based sources (e.g., via a connection to a PAN, a WiFi network, a cellular network, etc.). In some embodiments, the LPWAN satellite ephemeris data may be preloaded onto the endpoint device when the endpoint device is provisioned. At a later time, the endpoint device receives location information from the terrestrial network. This data, which may include time data that enables the endpoint device to synchronize its internal time with the time of the satellite constellation, enables the endpoint device to determine its current location. Then, using the determined position information, and using the LPWAN satellite ephemeris data and the time data, the endpoint device determines a time when at least one satellite of the LPWAN satellite constellation will be in (or near to) a position to receive a transmission from the endpoint device (e.g., directly overhead). Then, at the determined time, the endpoint device transmits data to the satellite(s) of the LPWAN satellite network.

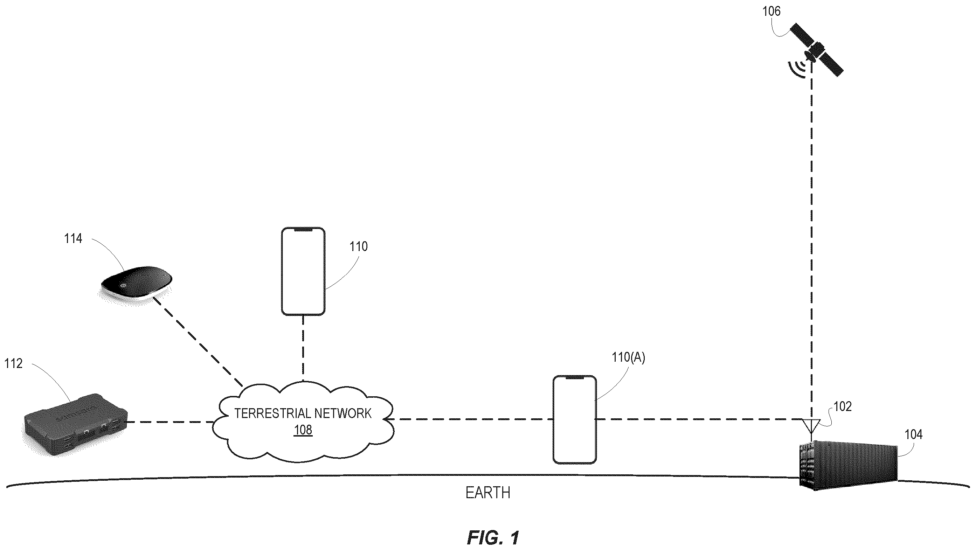

Some of the present embodiments describe how a satellite network and a terrestrial network (e.g., a PAN such as BLE (Bluetooth Low Energy)) can be used together to provide a low cost and long battery life solution for a mobile endpoint device. For example, FIG. 1 illustrates communication among a wireless endpoint device on Earth, a terrestrial network, and a satellite network according to some embodiments. An example endpoint device 102 is a tracker coupled with a shipping container 104 located on Earth. The endpoint device 102 communicates with (e.g., exchanges data with) a satellite network 106 (represented in FIG. 1 by a single satellite) and with a terrestrial network 108. In some embodiments, the terrestrial network 108 includes devices such as smartphones 110, vehicle gateways 112, smart home gateways (aka smart home hubs or home automation hubs) 114, as well as a wide variety of other electronic devices.

In general, a vehicle gateway is a component in modern vehicles that facilitates communication and data exchange between/among different networks or systems within the vehicle, as well as with one or more external networks. The vehicle gateway acts as a central hub or bridge, connecting various electronic control units (ECUs) and networks that manage different functions in the vehicle. In general, a smart home gateway, sometimes referred to as a smart home hub, bridge, controller, or coordinator, is a control center for a home, and enables electronic components of a home (e.g., appliances, sensors, relays, robots) to communicate with each other, as well as with one or more external networks, through a central point.

Gateway devices and/or smartphones according to some embodiments may maintain a continuous network connection, such as to a WiFi network and/or a cellular network, and may therefore typically have accurate onboard estimates of the current time and the device's current location (e.g., using GPS). Endpoint devices, by contrast, may not maintain a continuous network connection due to battery limitations, and may therefore not always have accurate onboard estimates of the current time and the endpoint device's current location.

If the satellite constellation of the satellite network 106 is dense enough such that a satellite is overhead of the endpoint device 102 all the time (e.g., approximately 512 satellites at 650km altitude), then the endpoint device 102 can transmit at any time and be guaranteed that a satellite is overhead. In some embodiments, a satellite may be considered to be overhead of the endpoint device when the satellite is ±45° over the horizon as measured from the location of the endpoint device on Earth. If, however, the satellite constellation is not dense enough for a satellite to be overhead all the time, assistance from the terrestrial network 108 in determining a location of the endpoint device 102 can significantly improve network performance. A satellite constellation that is not dense enough for a satellite to be overhead all the time may be referred to herein as a sparse constellation.

One example of a sparse constellation comprises two satellites in the same orbital plane and phased by 180-degrees. Such a sparse constellation provides about 12 hours of latency, because one of the satellites passes overhead of a fixed location on Earth about every 12 hours. In some embodiments, a satellite constellation could have additional (e.g., spare) satellites in the same plane that can be used to replace any satellites that fail over the service lifetime. In some embodiments, it is assumed that the satellites have the necessary propulsion to perform orbital station-keeping, though in other embodiments the satellites may not perform orbital station-keeping.

In astrodynamics, orbital station-keeping is keeping a spacecraft (e.g., a satellite) at a fixed distance from another spacecraft or celestial body. It requires a series of orbital maneuvers, which can for example be made with thruster burns, to keep the active craft in the same orbit as its target. For many LEO satellites, the effects of non-Keplerian forces (e.g., deviations of the gravitational force of the Earth from that of a homogeneous sphere, gravitational forces from Sun/Moon, solar radiation pressure, air drag, etc.) must be counteracted with orbital maneuvers to keep the satellite on its station.

In some embodiments, the terrestrial network 108 comprises a BLE gateway network. For example, the terrestrial network 108 may include wireless devices, such as smartphones 110, that are capable of keeping accurate time, capable of determining their location, such as through communication with a GNSS (global navigation satellite system), capable of communicating with a cloud computing network, and/or include one or more wireless communication radios (e.g., a PAN radio (e.g., a BLE radio), an LPWAN radio, a WiFi radio, a cellular radio, etc.). In some embodiments, the terrestrial network 108 may include smartphones running the Life 360 application, which currently includes approximately 77 million smartphones, and/or other applications. Additionally, the terrestrial network 108 may include vehicle gateways 112, and/or other devices such as drones, cars with built-in BLE radios, smart home gateways 114, BLE gateways in pallet service facilities, etc. These gateway devices may be mobile (e.g., smartphones, vehicle gateways, etc.) or stationary (e.g., smart home gateways, gateways in pallet service facilities, etc.).

In some embodiments, the terrestrial network 108 assists the endpoint devices 102 with the following tasks: receiving PAN beacons from the endpoint device 102 to help locate the endpoint device 102 without needing the satellite network 106, sending accurate time to the endpoint device 102 when the endpoint device 102's onboard clock drifts by at least a threshold amount, sending location information to the endpoint device 102 when the endpoint device 102's last estimated location has potentially drifted by at least a threshold amount, and, when the endpoint device 102 needs a firmware update, the terrestrial network 108 can indicate this in the beacon response and transmit the updated firmware to the endpoint device 102.

In some embodiments, for stationary gateways in the terrestrial network 108, the gateways may inform the endpoint devices 102 of their existence using periodic transmit beacons. This practice can allow an endpoint device 102 to save energy by not needing to transmit over the satellite network 106 when the endpoint device 102 is confident that a stationary gateway is nearby. In embodiments in which the stationary gateway is a BLE gateway, the beacon transmission from the stationary gateway may use the BLE advertisement channels, or it could use other channels in the ISM (industrial, scientific, and medical) radio band (e.g., at 900 MHz or 2.4 GHz) to reduce the traffic on the advertisement channels.

BLE advertisement channels are a method of communication that allows BLE devices to broadcast information about themselves to other devices without the need for a connection. There are three advertisement channels available in BLE, with each channel having a specific frequency range: Channel 37 (2402 MHz center frequency), Channel 38 (2426 MHz center frequency), and Channel 39 (2480 MHz center frequency), each having a bandwidth of 1 MHz. Each channel can be used for advertising different types of information. BLE advertisement channels work by allowing devices to send packets of data at regular intervals. These packets can contain information about the device, such as its name, services it offers, or other data that can be used to identify it. Other devices that are listening on the same advertisement channel can receive these packets and use the information contained within them to establish a connection with the advertising device.

In some embodiments, in order to simplify the architecture, all transmissions from a device in the terrestrial network 108, such as the smartphone 110(A) in FIG. 1, back to the endpoint device 102 may be connectionless, except for the firmware update discussed above, which can form a connection and use regular BLE channels for transmission due to the larger amount of data that needs to be transferred. Connectionless communication is a data transmission method used in packet switching networks, using data packets that are frequently called datagrams, in which each data packet is individually addressed and routed based on information carried in each packet, rather than in the setup information of a prearranged, fixed data channel as in connection-oriented communication. Under connectionless communication between two network endpoints, a message can be sent from one endpoint to another without prior arrangement. The device at one end of the communication transmits data addressed to the other, without first ensuring that the recipient is available and ready to receive the data.

In some embodiments, the terrestrial network 108 does not need to transmit data to the endpoint devices 102 very frequently, which advantageously reduces the power consumption of the terrestrial network 108, which is especially advantageous for mobile, battery powered devices in the terrestrial network 108. Furthermore, whenever a BLE device in the terrestrial network 108 transmits a message to an endpoint device 102, it cannot receive BLE beacons during this time, which reduces the uplink capacity of the terrestrial network 108. Reducing the frequency of data transmission from devices in the terrestrial network 108 to the endpoint devices 102 thus helps preserve the uplink capacity of the terrestrial network 108.

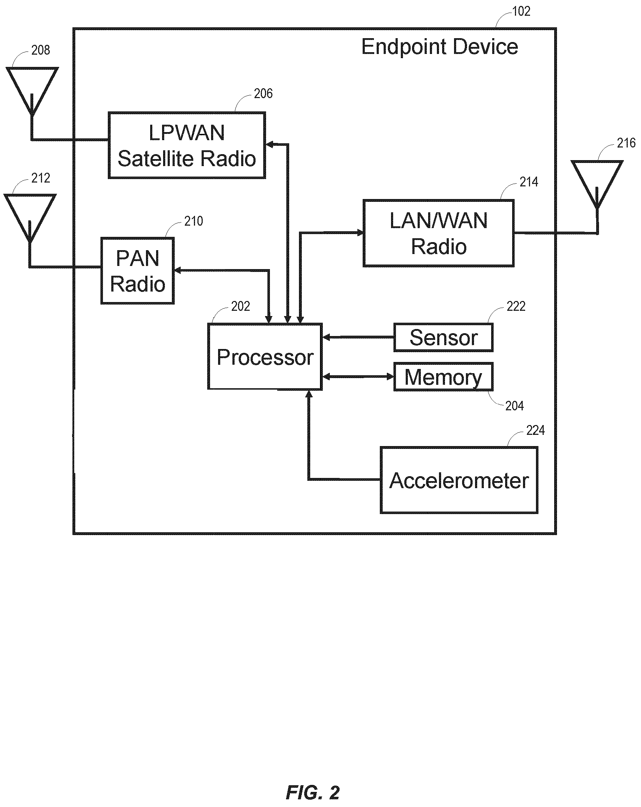

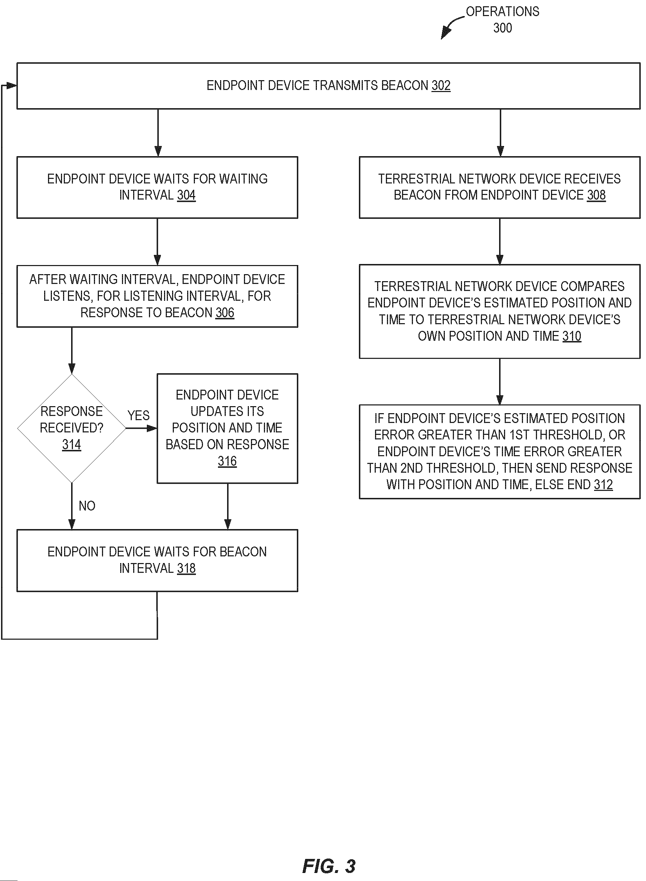

FIG. 2 illustrates an example wireless endpoint device 102 according to some embodiments. The endpoint device 102, which may comprise a sensor and/or a tracker, includes at least one processor 202 and memory 204. The processor(s) 202 can be any suitable processor(s) capable of executing instructions. For example, in various examples, the processor(s) 202 can be general-purpose or embedded processors implementing any of a variety of instruction set architectures (ISAs), such as the x86, ARM, PowerPC, SPARC, or MIPS ISAs, or any other suitable ISA. In multiprocessor 202 systems, each of the processors 202 can commonly, but not necessarily, implement the same ISA. The memory 204 can store instructions and data accessible by the processor(s) 202. In various examples, the memory 204 can be implemented using any suitable memory technology, such as random-access memory (RAM), static RAM (SRAM), synchronous dynamic RAM (SDRAM), nonvolatile/Flash-type memory, or any other type of memory. In various embodiments, the memory 204 stores instructions executable by the processor(s) 202 to perform aspects of the methods described herein, including without limitation the method 300 described with respect to FIG. 3.

The endpoint device 102 further includes one or more radios and one or more receivers, each of which is communicatively coupled with the processor 202, and each of which includes a corresponding antenna. For example, the illustrated embodiment of the endpoint device 102 includes an LPWAN satellite radio 206 and a corresponding LPWAN satellite radio antenna 208 that enable the endpoint device 102 to communicate wirelessly with the LPWAN satellite network 106. The illustrated embodiment of the endpoint device 102 further includes a PAN (personal area network) radio 210 and a corresponding PAN radio antenna 212 that enable the endpoint device 102 to communicate wirelessly via a PAN with a device in the terrestrial network 108 (e.g., the smartphone 110(A)) using, for example, Bluetooth or BLE (Bluetooth Low Energy) technology. The illustrated embodiment of the endpoint device 102 further includes a LAN/WAN (local area network / wide area network) radio 214 and a corresponding LAN/WAN radio antenna 216 that enable the endpoint device 102 to communicate wirelessly with a LAN and/or a WAN, such as, for example, a WiFi network or a cellular network. Any of the radios 206, 210, 214 may include a transmitter and a receiver (or a transceiver) that enable two-way communication with the respective networks. In alternative embodiments, one or more of the illustrated radios/antennas may be omitted, and/or one or more of the radios may be combined into a single radio that can communicate over multiple networks. For example, in some embodiments the LPWAN satellite radio 206 may be combined with the PAN radio 210.

In some embodiments, one or more of the antennas 208, 212, 216 may be omnidirectional, while in some embodiments one or more of the antennas 208, 212, 216 may have directional characteristics. For example, the LPWAN satellite radio antenna 208 may have a radiation pattern with one or more lobes or beams.

With continued reference to FIG. 2, the illustrated embodiment of the endpoint device 102 further includes a sensor 222 and an accelerometer 224, each of which is communicatively coupled with the processor 202. As discussed above, the endpoint device 102 may provide sensing functionality, and in various embodiments the onboard sensor 222 may be configured to sense any of a variety of conditions. For example, in non-limiting examples, the sensor 222 may sense ambient temperature or humidity, or detect the presence and/or concentration of gaseous substances (e.g., CO, CO2, O2, etc.) or particulate matter (e.g., dust, dirt, soot, smoke, etc.). In other non-limiting examples, the sensor 222 may monitor equipment, such as event counting, or sensing fuel level, battery charge, system health, noise level, etc. In another non-limiting example, the sensor 222 may monitor seismic activity. In embodiments in which the endpoint device 102 is a tracker, the sensor 222 may be omitted. The accelerometer 224 may be used to determine the orientation of the endpoint device 102, which may facilitate determination of the time when the satellites of the LPWAN satellite network will be in position to receive transmissions from the endpoint device 102. The accelerometer 224 may also be used to determine motion characteristics of the endpoint device 102. For example, motion typical of walking may indicate the endpoint device 102 is moving relatively slow, while vibration typical of a moving vehicle may indicate the endpoint device 102 is moving relatively fast. In various embodiments, the accelerometer 224 may be omitted.

In some embodiments, the PAN radio 210 of the endpoint device 102 may be a BLE radio capable of 20dBm (100mW) of output power. For this example, assume that the BLE radio transmits with 20dBm when sending data to the satellite network 106 and transmits with 10dBm (10mW) when sending data to the terrestrial network 108. Sending data to the satellite network 106 therefore consumes around 100mA for 0.4 seconds to transmit a 20-Byte packet.

While not shown in FIG. 2, the endpoint device 102 may include a power source, such as a battery, a solar cell, or any other type of power source. While not shown in FIG. 2, in some embodiments an endpoint device may include one or more other components, such as an altimeter. For example, information provided by an altimeter can help determine whether the endpoint device is located on an aircraft or on a high floor of a building, and this information can be used to determine when to transmit a message to a satellite. In another example, the endpoint device may include a sniffer that enables the endpoint device to detect nearby networks (e.g., WiFi), and this information can be used to determine when to send a message through a detected network, rather than to a satellite, in order to save power. Information about in-range networks can also be used to determine whether the endpoint device is moving fast or slow, or not moving at all (e.g., because the in-range networks are changing quickly, slowly, or not at all). Information about the motion of the endpoint device can be leveraged to determine a power mode for the endpoint device, such as a low-power mode when the endpoint device is stationary.

In some embodiments, when an endpoint device 102 is provisioned its memory 204 gets loaded with the current time, the endpoint device 102's current location, and ephemeris data for the satellite network 106. In embodiments in which the satellites 106 perform orbital station-keeping, the ephemeris data only needs to be loaded at provisioning time and does not need to be updated, because the satellites will not drift from their respective stations. In embodiments in which the satellites 106 do not perform orbital station-keeping, the ephemeris data may be loaded at provisioning time, but later updated as the satellites drift from their respective stations.

In some embodiments, once the endpoint device 102 is provisioned, it begins to beacon periodically on the three BLE advertisement channels. The beacons contain an identifier (e.g., a Universally Unique Identifier (UUID)) of the endpoint device 102. In some embodiments, the transmit power of these beacons is 10mW, or any other value. It takes around 1mS to transmit on all three BLE advertisement channels. Therefore, at a beacon rate of once every 5 seconds, the average beacon current consumption is equal to 10mA × 0.001s / 5s = 2µA (for an endpoint device 102 that operates at 50% efficiency at 3V).

After an endpoint device 102 is provisioned, its onboard time will begin accumulating error according to the accuracy of the crystal oscillator of the endpoint device 102's clock. In some embodiments, the accumulated error can be kept under 20ppm by using simple temperature compensation algorithms in software. In some embodiments, a satellite may be overhead for around 2.5 minutes, so assuming 20ppm of time drift for the endpoint device 102 means that the time error in the endpoint device 102 would only need to be corrected (by receiving updated time information from a device in the terrestrial network 108) every 86 days.

As the endpoint device 102 moves, for example if the endpoint device 102 is attached to a pallet that is being transported on a truck, its estimate of its own position will also accumulate error over time. FIG. 3 illustrates operations 300 of a method for maintaining accurate location and time estimates for the endpoint devices 102 according to some embodiments. Some or all of the operations 300 (or other processes described herein, or variations, and/or combinations thereof) are performed under the control of one or more computing devices configured with executable instructions, and are implemented as code (e.g., executable instructions, one or more computer programs, or one or more applications) executing collectively on one or more processors. The code is stored on a computer-readable storage medium, for example, in the form of a computer program comprising instructions executable by one or more processors. The computer-readable storage medium is non-transitory.

At block 302, the endpoint device 102 transmits a beacon. In some embodiments, the endpoint device 102 transmits the beacon at regular intervals (e.g., every 5 seconds), which may be referred to as a beacon interval. In some embodiments, the beacon contains an identifier for the endpoint device 102 (e.g., an endpoint-ID) as well as the endpoint device 102's current estimates of its own position and the current time. For example, the current time may be a timestamp corresponding to a time when the beacon is transmitted based on the internal clock of the endpoint device 102. At block 304, after the endpoint device 102 has transmitted the beacon, it waits for a waiting interval (e.g., one second). At block 306, after the waiting interval ends, the endpoint device 102 listens, for a listening interval (e.g., 5ms), for a response to the beacon. In some embodiments, current consumption for a BLE receiver is approximately 2mA, so a listening duration of 5ms that occurs at 5s intervals consumes 2µA of current on average.

Meanwhile, at block 308, the terrestrial network device 110(A) receives the beacon, and at block 310 it compares the endpoint device 102's estimated position and time to its own position and time. The endpoint device 102's estimated position and time is contained in the beacon received by the terrestrial network device 110(A), whereas the terrestrial network device 110(A) may determine its own estimated position and time through communication with one or more sources, such as a GNSS, a cellular network, or a WiFi (or other wireless) network. At block 312, if the position information received from the endpoint device 102 has an error greater than a first threshold value (e.g., 100km, or any other value), or if the time information received from the endpoint device 102 has an error greater than a second threshold value (e.g., 30 seconds, or any other value), then the terrestrial network device 110(A) responds to the endpoint device 102's beacon during the endpoint device 102's listening interval with updated position and time information. In some embodiments, the updated position information is the position of the terrestrial network device 110(A) itself, and not the position of the endpoint device 102. However, since the endpoint device 102 and the terrestrial network device 110(A) communicate using a PAN, the maximum distance between the two devices during this process is relatively small (e.g., 30m), so the error in the updated position of the endpoint device 102 is likewise relatively small. Also at block 312, if the position information received from the endpoint device 102 does not have an error greater than the first threshold value, and if the time information received from the endpoint device 102 does not have an error greater than the second threshold value, then the terrestrial network device 110(A) does not send a response to the beacon received from the endpoint device 102.

At block 314, if the endpoint device 102 has received a response to the beacon transmitted at block 302, then the process moves to block 316 where the endpoint device 102 updates its estimated position and time based on the received response (from the terrestrial network device 110(A)). In any case, however, the process moves to block 318, where the endpoint device waits for the beacon interval (e.g., 5s) before returning to block 302 and transmitting another beacon.

At block 320, the endpoint device 102 determines, based on the updated estimated position and time, and based on the satellite ephemeris data, a time to transmit a message to the satellite network 106. For example, the determined time may correspond to a time when a satellite 106 will be overhead of the estimated position of the endpoint device 102. The process then moves to block 322, where the endpoint device 102 waits until the time determined at block 320 and then transmits a message to the satellite network 106.

In some embodiments, at block 306, if multiple terrestrial network devices receive the same beacon from the endpoint device 102, the terrestrial network devices can transmit the signal strengths of the received beacons to a computing device (e.g., a server), and the server determines which terrestrial network device will respond to the beacon (e.g., the one with the strongest received signal strength) to avoid collisions on the response message back to the endpoint device 102. In some embodiments, the multiple terrestrial network devices could instead communicate directly with one another over a LAN to avoid the need to involve the server, which would reduce server costs and potentially reduce power consumption by the terrestrial network devices if they are connected through a cellular backhaul, for example.

In some embodiments, the endpoint device 102 may also transmit an optional special beacon that requests an acknowledgement from any terrestrial network device that receives the special beacon. This process would allow the endpoint device 102 to know that a terrestrial network device is nearby so that the endpoint device 102 doesn't need to transmit a message over the satellite link, thereby allowing the endpoint device 102 to save power.

For stationary (or very slow moving) endpoint devices 102, devices in the terrestrial network (e.g., the devices 110, 112, 114) may respond to beacons from the endpoint device 102 very infrequently because the endpoint device 102 would only need to receive beacon responses when its clock drifts more than the threshold amount of time, and because its location error would seldom, if ever, be above the threshold amount of distance. For example, if a terrestrial network device 110, 112, 114 only responds to beacons when the time information in the beacon has an error greater than ±30 seconds, then the endpoint device 102 would only receive a beacon response with an updated time every 17 days (approximately). For fast moving endpoint devices 102, however, the frequency of time and position updates might be closer to once every 2 hours. Even at this frequency, however, the terrestrial network devices 110, 112, 114 would only spend a negligible amount of time transmitting versus the time spent receiving messages.

In some embodiments, in the case where the endpoint device 102 estimates that its time is accurate to within a threshold amount (e.g., 30 seconds), and that its location estimate is accurate to within another threshold amount (e.g., ±300km), the endpoint device 102 may repeat a same message to the satellite 106 three times for added reliability. For example, the message may be transmitted at a first time that is the threshold number of seconds before the time that the endpoint device 102 has determined that the satellite 106 should be overhead, then again at the determined time, and then again at a third time that is the threshold number of seconds after the determined time. In this manner, the satellite 106 should receive at least one of the messages, even if the endpoint device 102's estimated time is off by the threshold amount.

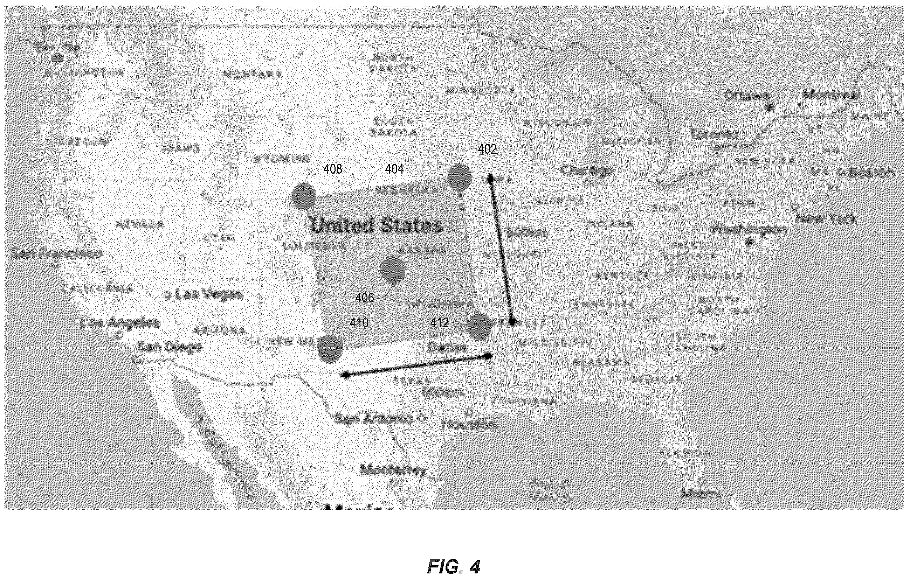

In some embodiments, for mobile endpoint devices 102 it may be more likely that the location error becomes the limiting factor for reliable transmission to the satellite 106 rather than the time error. In the case where the endpoint device 102 believes that its location estimate might have an error greater than a threshold amount (e.g., ±300km), the endpoint device 102 may transmit the same message five times. One message is sent at the time corresponding to when the satellite should be overhead if the endpoint device 102's location estimate is accurate, and the other four messages are transmitted at the times corresponding to when the satellite should be overhead if the endpoint device 102's location estimate is off by the threshold amount in two perpendicular directions, both positive and negative. For example, with reference to FIG. 4, if the endpoint device 102's location estimate is off by the positive threshold amount (e.g., +300km) in both perpendicular directions, then one of the other four messages is transmitted at the time corresponding to when the satellite should be overhead of a first corner 402 of a square 404 centered on the endpoint device 102's actual location estimate 406. If the endpoint device 102's location estimate is off by the positive threshold amount (e.g., +300km) in one of the perpendicular directions, and off by the negative threshold amount (e.g., -300km) in the other of the perpendicular directions, then another one of the other four messages is transmitted at the time corresponding to when the satellite should be overhead of a second corner 408 of the square 404. Similarly, messages are transmitted at the remaining two times that correspond to the third and fourth corners 410, 412 of the square 404. This technique trades off additional battery power for reducing the endpoint location accuracy needed to guarantee that a satellite is overhead when a message is transmitted. This approach can be expanded in some embodiments to include more transmissions at more endpoint virtual locations.

Some locations on Earth may present obstructions in the communication path between the endpoint device and the satellite. Examples of such obstructions include, without limitation, hills, mountains, trees, buildings, or other man-made objects. To efficiently transmit data from the endpoint device on Earth to a satellite, it is advantageous to have an unobstructed communication path between the endpoint device and the satellite, as objects in the communication path attenuate the transmit signal from the endpoint device. Depending on the size and/or composition of any object(s) in the communication path, the signal attenuation may be such that the endpoint device must increase its transmit power for the signal to be received by the satellite, or the signal attenuation may be so severe that communication from the endpoint device to the satellite is impossible. Any increase in transmit power from the endpoint device increases the drain on the device's battery, which in turn shortens the usable lifespan of the endpoint device (at least until the drained battery can be recharged or replaced). Thus, some of the present embodiments may accumulate information about transmit locations that can be leveraged for future transmissions by endpoint devices from those locations. For example, information about when a transmission occurred from a given location can be stored along with other information about that transmission, such as whether or not the transmission was received by a satellite, where the satellite was located at that time (e.g., directly overhead or at what angle and direction from the transmit location), the received signal strength, etc. This database of transmit locations can be loaded into memory of an endpoint device and used to inform when to transmit information to a satellite from a given location to avoid obstructions that might be present at that location.

In some embodiments, gateway devices (e.g., vehicle gateways 112, smart home gateways 114, etc.) can also transmit beacons. The beacons can contain information useful to the endpoint devices 102, such as density of wireless devices in the vicinity. If the density of wireless devices is above a threshold value (e.g., in an urban environment), the endpoint device 102 may decide not to transmit a message to the satellite network 106, because doing so would require greater transmit power to overcome interference from other wireless devices, and because urban environments are more likely than non-urban environments to contain physical obstructions that would attenuate the signal from the endpoint device 102 to the satellite network 106. When the density of wireless devices is above a threshold value, the endpoint device 102 may determine to continue communicating with the terrestrial network 108, rather than the satellite network 106, until the density of wireless devices drops below the threshold value. Conversely, when the density of wireless devices is below the threshold value, which may indicate the endpoint device 102 is in a rural environment, the endpoint device 102 may determine to continue communicating with the satellite network 106.

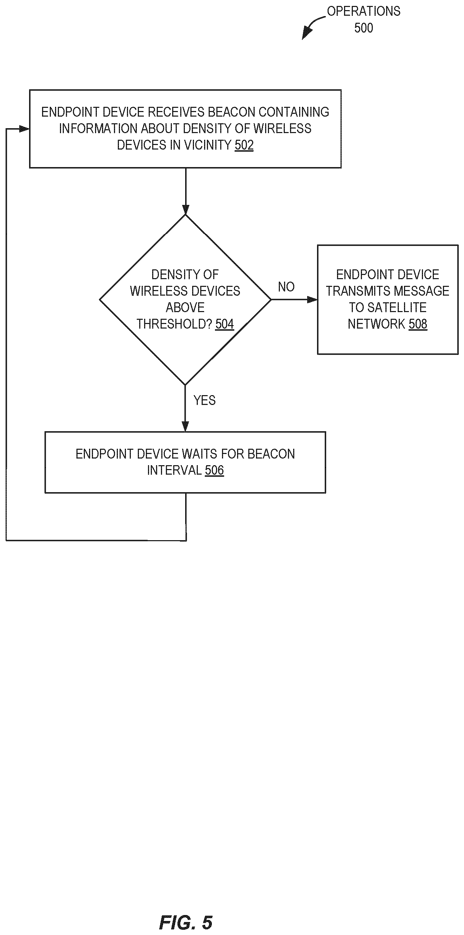

For example, FIG. 5 illustrates operations 500 of a method for avoiding interference from other wireless devices when transmitting a message to a satellite network according to some embodiments. Some or all of the operations 500 (or other processes described herein, or variations, and/or combinations thereof) are performed under the control of one or more computing devices configured with executable instructions, and are implemented as code (e.g., executable instructions, one or more computer programs, or one or more applications) executing collectively on one or more processors. The code is stored on a computer-readable storage medium, for example, in the form of a computer program comprising instructions executable by one or more processors. The computer-readable storage medium is non-transitory.

At block 502, the endpoint device 102 receives a beacon containing information about the density of wireless devices in the vicinity of the endpoint device 102. For example, the beacon may be received from a gateway device. At block 504, if the information in the beacon indicates that the density of wireless devices in the vicinity of the endpoint device 102 is above a threshold value, then the process moves to block 506, where the endpoint device 102 waits for the beacon interval (e.g., 5s) before the process 400 returns to block 502 where the endpoint device 102 receives another beacon. If, however, the determination at block 504 is that the information in the beacon indicates that the density of wireless devices in the vicinity of the endpoint device 102 is not above the threshold value, then the process moves to block 508, where the endpoint device 102 transmits a message to the satellite network 106. The process 400 may then end or return to block 502 where the endpoint device 102 receives another beacon.

In some embodiments, when the endpoint device 102 is located in a rural environment it may leverage geographical and topographical information to determine when to transmit a message to the satellite network 106. For example, the endpoint device 102 may receive topographical information corresponding to its current location from either (or both) of the terrestrial network 108 or the satellite network 106. From the topographical information, the endpoint device 102 may determine there is an obstruction (e.g., a mountain range) in a westerly direction from the endpoint device 102's location. Using the satellite ephemeris data, the endpoint device 102 may determine there is an upcoming satellite pass (a time at which a satellite 106 will be passing overhead) in which the satellite 106 will be to the west of the endpoint device 102's location. Based on the information about the obstruction in the westerly direction, the endpoint device 102 may determine not to transmit a message to the satellite network 106 at the time of the upcoming satellite pass because the obstruction may attenuate the signal transmitted from the endpoint device 102. The endpoint device 102 may further determine, again based on the topographical information and the ephemeris data, to instead transmit a message to the satellite network 106 at a later time (after the westerly satellite pass) when a satellite 106 will be passing overhead to the east of the endpoint device 102's location, because there is no known physical obstruction in that direction.

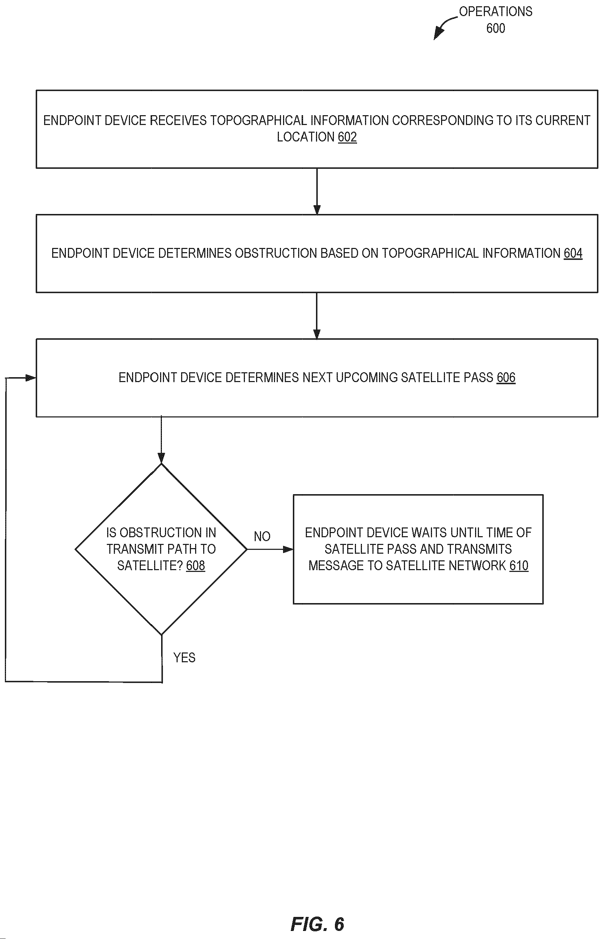

For example, FIG. 6 illustrates operations 600 of a method for avoiding physical obstructions when transmitting a message to a satellite network according to some embodiments. Some or all of the operations 600 (or other processes described herein, or variations, and/or combinations thereof) are performed under the control of one or more computing devices configured with executable instructions, and are implemented as code (e.g., executable instructions, one or more computer programs, or one or more applications) executing collectively on one or more processors. The code is stored on a computer-readable storage medium, for example, in the form of a computer program comprising instructions executable by one or more processors. The computer-readable storage medium is non-transitory.

At block 602, the endpoint device 102 receives topographical information corresponding to its current location. For example, the topographical information may be received from either (or both) of the terrestrial network 108 or the satellite network 106. At block 604, the endpoint device 102 determines, based on the topographical information received at block 602, that there is an obstruction (e.g., a mountain) in a given direction from the endpoint device 102's current location. At block 606, the endpoint device 102 determines, based on the satellite ephemeris data, information about a next upcoming satellite pass, including for example when the pass will occur and a direction of the pass from the endpoint device 102's current location. At block 608, the endpoint device 102 determines, based on the topographical information and the satellite ephemeris data, whether the obstruction determined at block 604 is in the transmit path from the endpoint device 102's current location to the satellite determined at block 606. If the obstruction is not in the transmit path from the endpoint device 102's current location to the satellite, then the process moves to block 610, where the endpoint device 102 waits until the time of the satellite pass and then transmits a message to the satellite network 106. However, if the determination at block 608 is that the obstruction is in the transmit path from the endpoint device 102's current location to the satellite, then the process returns to block 606 where the endpoint device 102 again determines, based on the satellite ephemeris data, information about a next upcoming satellite pass (a satellite pass that will occur next in time after the satellite pass that was determined at block 608 to be unsatisfactory because of the obstruction in the transmit path). The process 600 may then end or return to any one of blocks 602, 604, or 606.

In some embodiments, endpoint devices 102 may also act as gateway devices by transmitting information to other endpoint devices 102 in response to beacons received from those other endpoint devices 102. For example, if an endpoint device 102 has a large battery, such that it is not as battery-constrained as other endpoint devices 102 having smaller batteries, it may act as a gateway device in addition to acting as an endpoint device (may be referred to as a dual-function device). This dual functionality may be advantageous in environments with high density of endpoint devices, such as warehouses where pallets of goods are stored and/or ports where shipping containers are located. These dual-function devices may, in some embodiments, listen for beacons from other endpoint devices 102 and/or from other dual-function devices.

One example of a dual-function device may be an endpoint device that has an onboard GNSS (e.g., GPS) chip. If an endpoint device with a GPS chip receives a beacon from another endpoint device, it may respond to the beacon with location and/or time information. In this way, endpoint devices may receive updated location and/or time information from fellow endpoint devices in addition to, or instead of, receiving such information from gateway devices. In some embodiments, dual-function devices that act as both endpoints and gateways may not maintain a continuous network connection, as a typical gateway device would, due to battery limitations.

In various embodiments, a dual-function (endpoint/gateway) device may, upon receiving a beacon from another endpoint device, always send a response message with location and/or time information. In other embodiments, a dual-function device may only send a beacon response message when the dual-function device has more accurate location and/or time information than the location and/or time information contained in the beacon. For example, upon receiving a beacon from another endpoint device, the dual-function device may compare the location and/or time information contained in the beacon to its own location and/or time information and only send a response to the beacon when its own location and/or time information is more accurate than that contained in the beacon. In some embodiments, the beacon may include a request for updated location and/or time information. For example, when an endpoint device determines that its most recent receipt of location and/or time information from a gateway device (or from the satellite network) occurred more than a threshold amount of time ago (e.g., 30 days), the endpoint device may include a request for updated location and/or time information in its beacons. The example of 30 days for the threshold amount of time is just one illustrative example, and this threshold could have any value. In some embodiments, the value of this threshold may depend upon the magnitude of the clock drift of the endpoint device.

In various embodiments, a dual-function device that receives a beacon from an endpoint device may determine whether or not its own location and/or time information is more accurate than that contained in the beacon according to various techniques. For example, if the dual-function device is stationary, then its own location information may always be determined to be more accurate than location information contained in a beacon from a mobile endpoint device. In some embodiments, regardless of whether the dual-function device is stationary or mobile, the dual-function device may determine that its own location and/or time information is more accurate than that contained in the beacon when its own location and/or time information was updated more recently than that contained in the beacon. In such embodiments, the beacon may contain an indication of a date and/or time when the location and/or time information of the endpoint device that sent the beacon was last updated.

In some embodiments, the beacon may contain an indication of the estimated accuracy (or estimated error) of the time indicated in the beacon, and this clock error estimate may be determined according to the clock drift of the endpoint device that sent the beacon. For example, the beacon may indicate a current estimated time of 04:20:00.1226 ±00:36:12.0026, where the value indicated as plus or minus (the estimated clock error) may be determined by the endpoint device that sent the beacon according to an equation that accounts for the clock drift of the endpoint device. Then, the dual-function device that receives the beacon may use the estimated clock error to determine whether its own time information is more accurate. In some embodiments, the dual-function device may only send a response to the beacon with updated time information when it determines that its own time information is more accurate than that contained in the beacon. Conversely, the dual-function device may include its own clock error estimate in the message it sends in response to the beacon, and the endpoint device that sent the beacon may compare the time information received from the dual-function device to its own time information, including its own clock error estimate, and determine whether or not to update its own time information using the time information received from the dual-function device (or to disregard the time information received from the dual-function device because it is less accurate than the endpoint device's own time information).

In some embodiments, the beacon may contain an indication of the estimated accuracy (or estimated error) of the location indicated in the beacon, and this location error estimate may be determined according to a speed of travel of the endpoint device that sent the beacon. For example, if the endpoint device is on a vehicle, then the endpoint device may estimate its location error according to a worst-case scenario where the vehicle is moving at a certain speed (e.g., 60 MPH). The endpoint device may include this location error estimate in the beacons it transmits, and the endpoint device may update its location information based on location information received from the dual-function device when the received location information is more accurate (where the accuracy determination may depend upon comparisons made using similar methodology to that described above with respect to time error estimates).

In some embodiments, when an endpoint device receives multiple beacon responses close in time to one another, the endpoint device may determine a current time and/or location using outlier filtering. For example, if the endpoint device receives multiple beacon responses, and one of the responses contains current time and/or location information that is significantly different from the information received from other responses to the same beacon, then the endpoint device may disregard the outlying information and determine that the beacon responses that are substantially in agreement with one another represent accurate time and/or location.

### Illustrative Systems

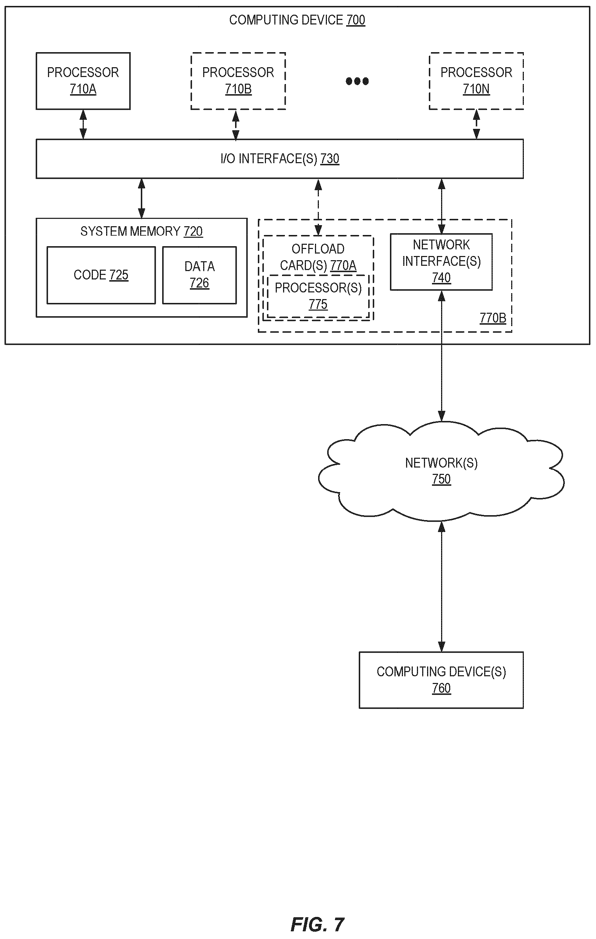

In some examples, a system that implements a portion or all of the techniques described herein can include a general-purpose computer system, such as the computing device 700 (also referred to as a computing system or electronic device) illustrated in FIG. 7, that includes, or is configured to access, one or more computer-accessible media. In the illustrated example, the computing device 700 includes one or more processors 710 coupled to a system memory 720 via an input/output (I/O) interface 730. The computing device 700 further includes a network interface 740 coupled to the I/O interface 730. While FIG. 7 shows the computing device 700 as a single computing device, in various examples the computing device 700 can include one computing device or any number of computing devices configured to work together as a single computing device 700.

In various examples, the computing device 700 can be a uniprocessor system including one processor 710, or a multiprocessor system including several processors 710 (e.g., two, four, eight, or another suitable number). The processor(s) 710 can be any suitable processor(s) capable of executing instructions. For example, in various examples, the processor(s) 710 can be general-purpose or embedded processors implementing any of a variety of instruction set architectures (ISAs), such as the x86, ARM, PowerPC, SPARC, or MIPS ISAs, or any other suitable ISA. In multiprocessor systems, each of the processors 710 can commonly, but not necessarily, implement the same ISA.

The system memory 720 can store instructions and data accessible by the processor(s) 710. In various examples, the system memory 720 can be implemented using any suitable memory technology, such as random-access memory (RAM), static RAM (SRAM), synchronous dynamic RAM (SDRAM), nonvolatile/Flash-type memory, or any other type of memory. In the illustrated example, program instructions and data implementing one or more desired functions, such as those methods, techniques, and data described above, are shown stored within the system memory 720 as code 725 and data 726.

In some examples, the I/O interface 730 can be configured to coordinate I/O traffic between the processor 710, the system memory 720, and any peripheral devices in the device, including the network interface 740 and/or other peripheral interfaces (not shown). In some examples, the I/O interface 730 can perform any necessary protocol, timing, or other data transformations to convert data signals from one component (e.g., the system memory 720) into a format suitable for use by another component (e.g., the processor 710). In some examples, the I/O interface 730 can include support for devices attached through various types of peripheral buses, such as a variant of the Peripheral Component Interconnect (PCI) bus standard or the Universal Serial Bus (USB) standard, for example. In some examples, the function of the I/O interface 730 can be split into two or more separate components, such as a north bridge and a south bridge, for example. Also, in some examples, some or all of the functionality of the I/O interface 730, such as an interface to the system memory 720, can be incorporated directly into the processor 710.

The network interface 740 can be configured to allow data to be exchanged between the computing device 700 and other computing devices 760 attached to a network or networks 750, such as other computer systems or devices as illustrated in FIG. 1, for example. In various examples, the network interface 740 can support communication via any suitable wired or wireless general data networks, such as types of Ethernet network, for example. Additionally, the network interface 740 can support communication via telecommunications/telephony networks, such as analog voice networks or digital fiber communications networks, via storage area networks (SANs), such as Fibre Channel SANs, and/or via any other suitable type of network and/or protocol.

In some examples, the computing device 700 includes one or more offload cards 770A or 770B (including one or more processors 775, and possibly including the one or more network interfaces 740) that are connected using the I/O interface 730 (e.g., a bus implementing a version of the Peripheral Component Interconnect - Express (PCI-E) standard, or another interconnect such as a QuickPath interconnect (QPI) or UltraPath interconnect (UPI)). For example, in some examples the computing device 700 can act as a host electronic device (e.g., operating as part of a hardware virtualization service) that hosts compute resources such as compute instances, and the one or more offload cards 770A or 770B execute a virtualization manager that can manage compute instances that execute on the host electronic device. As an example, in some examples the offload card(s) 770A or 770B can perform compute instance management operations, such as pausing and/or un-pausing compute instances, launching and/or terminating compute instances, performing memory transfer/copying operations, etc. These management operations can, in some examples, be performed by the offload card(s) 770A or 770B in coordination with a hypervisor (e.g., upon a request from a hypervisor) that is executed by the other processors 710A-710N of the computing device 700. However, in some examples the virtualization manager implemented by the offload card(s) 770A or 770B can accommodate requests from other entities (e.g., from compute instances themselves), and cannot coordinate with (or service) any separate hypervisor.

In some examples, the system memory 720 can be one example of a computer-accessible medium configured to store program instructions and data as described above. However, in other examples, program instructions and/or data can be received, sent, or stored upon different types of computer-accessible media. Generally, a computer-accessible medium can include any non-transitory storage media or memory media such as magnetic or optical media, e.g., disk or DVD/CD coupled to the computing device 700 via the I/O interface 730. A non-transitory computer-accessible storage medium can also include any volatile or non-volatile media such as RAM (e.g., SDRAM, double data rate (DDR) SDRAM, SRAM, etc.), read only memory (ROM), etc., that can be included in some examples of the computing device 700 as the system memory 720 or another type of memory. Further, a computer-accessible medium can include transmission media or signals such as electrical, electromagnetic, or digital signals, conveyed via a communication medium such as a network and/or a wireless link, such as can be implemented via the network interface 740.

Various examples discussed or suggested herein can be implemented in a wide variety of operating environments, which in some cases can include one or more user computers, computing devices, or processing devices which can be used to operate any of a number of applications. User or client devices can include any of a number of general-purpose personal computers, such as desktop or laptop computers running a standard operating system, as well as cellular, wireless, and handheld devices running mobile software and capable of supporting a number of networking and messaging protocols. Such a system also can include a number of workstations running any of a variety of commercially available operating systems and other known applications for purposes such as development and database management. These devices also can include other electronic devices, such as dummy terminals, thin-clients, gaming systems, and/or other devices capable of communicating via a network.

Most examples use at least one network that would be familiar to those skilled in the art for supporting communications using any of a variety of widely available protocols, such as Transmission Control Protocol / Internet Protocol (TCP/IP), File Transfer Protocol (FTP), Universal Plug and Play (UPnP), Network File System (NFS), Common Internet File System (CIFS), Extensible Messaging and Presence Protocol (XMPP), AppleTalk, etc. The network(s) can include, for example, a local area network (LAN), a wide-area network (WAN), a virtual private network (VPN), the Internet, an intranet, an extranet, a public switched telephone network (PSTN), an infrared network, a wireless network, and any combination thereof.

In examples using a web server, the web server can run any of a variety of server or mid-tier applications, including HTTP servers, File Transfer Protocol (FTP) servers, Common Gateway Interface (CGI) servers, data servers, Java servers, business application servers, etc. The server(s) also can be capable of executing programs or scripts in response requests from user devices, such as by executing one or more Web applications that can be implemented as one or more scripts or programs written in any programming language, such as Java^{®}, C, C# or C++, or any scripting language, such as Perl, Python, PHP, or TCL, as well as combinations thereof. The server(s) can also include database servers, including without limitation those commercially available from Oracle(R), Microsoft(R), Sybase(R), IBM(R), etc. The database servers can be relational or non-relational (e.g., "NoSQL"), distributed or non-distributed, etc.

Environments disclosed herein can include a variety of data stores and other memory and storage media as discussed above. These can reside in a variety of locations, such as on a storage medium local to (and/or resident in) one or more of the computers or remote from any or all of the computers across the network. In a particular set of examples, the information can reside in a storage-area network (SAN) familiar to those skilled in the art. Similarly, any necessary files for performing the functions attributed to the computers, servers, or other network devices can be stored locally and/or remotely, as appropriate. Where a system includes computerized devices, each such device can include hardware elements that can be electrically coupled via a bus, the elements including, for example, at least one central processing unit (CPU), at least one input device (e.g., a mouse, keyboard, controller, touch screen, or keypad), and/or at least one output device (e.g., a display device, printer, or speaker). Such a system can also include one or more storage devices, such as disk drives, optical storage devices, and solid-state storage devices such as random-access memory (RAM) or read-only memory (ROM), as well as removable media devices, memory cards, flash cards, etc.

Such devices also can include a computer-readable storage media reader, a communications device (e.g., a modem, a network card (wireless or wired), an infrared communication device, etc.), and working memory as described above. The computer-readable storage media reader can be connected with, or configured to receive, a computer-readable storage medium, representing remote, local, fixed, and/or removable storage devices as well as storage media for temporarily and/or more permanently containing, storing, transmitting, and retrieving computer-readable information. The system and various devices also typically will include a number of software applications, modules, services, or other elements located within at least one working memory device, including an operating system and application programs, such as a client application or web browser. It should be appreciated that alternate examples can have numerous variations from that described above. For example, customized hardware might also be used and/or particular elements might be implemented in hardware, software (including portable software, such as applets), or both. Further, connection to other computing devices such as network input/output devices can be employed.

Storage media and computer readable media for containing code, or portions of code, can include any appropriate media known or used in the art, including storage media and communication media, such as but not limited to volatile and non-volatile, removable and non-removable media implemented in any method or technology for storage and/or transmission of information such as computer readable instructions, data structures, program modules, or other data, including RAM, ROM, Electrically Erasable Programmable Read-Only Memory (EEPROM), flash memory or other memory technology, Compact Disc-Read Only Memory (CD-ROM), Digital Versatile Disk (DVD) or other optical storage, magnetic cassettes, magnetic tape, magnetic disk storage or other magnetic storage devices, or any other medium which can be used to store the desired information and which can be accessed by a system device. Based on the disclosure and teachings provided herein, a person of ordinary skill in the art will appreciate other ways and/or methods to implement the various examples.

In the preceding description, various examples are described. For purposes of explanation, specific configurations and details are set forth to provide a thorough understanding of the examples. However, it will also be apparent to one skilled in the art that the examples can be practiced without the specific details. Furthermore, well-known features can be omitted or simplified in order not to obscure the example being described.

Bracketed text and blocks with dashed borders (e.g., large dashes, small dashes, dot-dash, and dots) are used herein to illustrate optional aspects that add additional features to some examples. However, such notation should not be taken to mean that these are the only options or optional operations, and/or that blocks with solid borders are not optional in certain examples.

Reference numerals with suffix letters (e.g., 110(A)) can be used to indicate that there can be one or multiple instances of the referenced entity in various examples, and when there are multiple instances, each does not need to be identical but may instead share some general traits or act in common ways. Further, the particular suffixes used are not meant to imply that a particular amount of the entity exists unless specifically indicated to the contrary. Thus, two entities using the same or different suffix letters might or might not have the same number of instances in various examples.

References to "one example," "an example," etc., indicate that the example described may include a particular feature, structure, or characteristic, but every example may not necessarily include the particular feature, structure, or characteristic. Moreover, such phrases are not necessarily referring to the same example. Further, when a particular feature, structure, or characteristic is described in connection with an example, it is submitted that it is within the knowledge of one skilled in the art to affect such feature, structure, or characteristic in connection with other examples whether or not explicitly described.

Moreover, in the various examples described above, unless specifically noted otherwise, disjunctive language such as the phrase "at least one of A, B, or C" is intended to be understood to mean either A, B, or C, or any combination thereof (e.g., A, B, and/or C). Similarly, language such as "at least one or more of A, B, and C" (or "one or more of A, B, and C") is intended to be understood to mean A, B, or C, or any combination thereof (e.g., A, B, and/or C). As such, disjunctive language is not intended to, nor should it be understood to, imply that a given example requires at least one of A, at least one of B, and at least one of C to each be present.

As used herein, the term "based on" (or similar) is an open-ended term used to describe one or more factors that affect a determination or other action. It is to be understood that this term does not foreclose additional factors that may affect a determination or action. For example, a determination may be solely based on the factor(s) listed or based on the factor(s) and one or more additional factors. Thus, if an action A is "based on" B, it is to be understood that B is one factor that affects action A, but this does not foreclose the action from also being based on one or multiple other factors, such as factor C. However, in some instances, action A may be based entirely on B.

Unless otherwise explicitly stated, articles such as "a" or "an" should generally be interpreted to include one or multiple described items. Accordingly, phrases such as "a device configured to" or "a computing device" are intended to include one or multiple recited devices. Such one or more recited devices can be collectively configured to carry out the stated operations. For example, "a processor configured to carry out operations A, B, and C" can include a first processor configured to carry out operation A working in conjunction with a second processor configured to carry out operations B and C, where the second processor could be part of same computing device as the first processor or part of a separate computing device as the first processor.

Further, the words "may" or "can" are used in a permissive sense (i.e., meaning having the potential to), rather than the mandatory sense (i.e., meaning must). The words "include," "including," and "includes" are used to indicate open-ended relationships and therefore mean including, but not limited to. Similarly, the words "have," "having," and "has" also indicate open-ended relationships, and thus mean having, but not limited to. The terms "first," "second," "third," and so forth as used herein are used as labels for the nouns that they precede, and do not imply any type of ordering (e.g., spatial, temporal, logical, etc.) unless such an ordering is otherwise explicitly indicated. Similarly, the values of such numeric labels are generally not used to indicate a required amount of a particular noun in the claims recited herein, and thus a "fifth" element generally does not imply the existence of four other elements unless those elements are explicitly included in the claim or it is otherwise made abundantly clear that they exist.

The specification and drawings are, accordingly, to be regarded in an illustrative rather than a restrictive sense. It will, however, be evident that various modifications and changes can be made thereunto without departing from the broader scope of the disclosure as set forth in the claims.

## Claims

1. A computer-implemented method comprising:
transmitting, by an endpoint device, a beacon including an estimated position of the endpoint device and a timestamp corresponding to a time when the beacon is transmitted according to a clock of the endpoint device;
waiting, by the endpoint device, for a waiting interval after transmitting the beacon;
after the waiting interval, listening, by the endpoint device, for a listening interval, for a response to the beacon from a network device;
receiving, by the endpoint device, the response to the beacon from the network device, wherein the response includes updated position information and updated time information; and
updating, by the endpoint device, the estimated position based on the updated position information and updating the clock of the endpoint device based on the updated time information.

2. The computer-implemented method of claim 1, further comprising waiting, by the endpoint device, for a beacon interval and then transmitting, by the endpoint device, another beacon including another estimated position of the endpoint device and another timestamp corresponding to a time when the another beacon is transmitted according to the clock of the endpoint device.

3. The computer-implemented method of claim 1 or claim 2, wherein the updated position information is based on a comparison made by the network device between the estimated position of the endpoint device contained in the beacon and a position of the network device.

4. The computer-implemented method of any preceding claim, wherein the updated time information is based on a comparison made by the network device between the timestamp contained in the beacon and a time according to a clock of the network device.

5. The computer-implemented method of any preceding claim, wherein the updated time information is based on a determination made by the network device that a first error in the estimated position of the endpoint device is greater than a first threshold value or a second error in the timestamp is greater than a second threshold value.

6. The computer-implemented method of any preceding claim, wherein the timestamp contained in the beacon includes an estimated error.

7. The computer-implemented method of any preceding claim, further comprising determining, by the endpoint device, based on the updated position information and the updated time information, and based on satellite ephemeris data, a time to transmit a message to a satellite network.

8. The computer-implemented method of claim 7, further comprising waiting, by the endpoint device, until the time to transmit the message to the satellite network and then transmitting, by the endpoint device, the message to the satellite network.

9. The computer-implemented method of claim 7 or claim 8, further comprising receiving, by the endpoint device, topographical information corresponding to the updated position information, wherein determining, by the endpoint device, the time to transmit the message to the satellite network is further based on the topographical information.

10. The computer-implemented method of any preceding claim, wherein transmitting the message to the satellite network comprises, transmitting, by the endpoint device, the message a plurality times including at a first time corresponding to when a satellite is expected to be overhead based on the updated position information of the endpoint device being accurate and at least one additional time corresponding to when a satellite is expected to be overhead based on the updated position information of the endpoint device being inaccurate by a threshold amount in one of two perpendicular directions, either positive or negative.

11. The computer-implemented method of any preceding claim, wherein the beacon is an identifier of the endpoint device.

12. A computer-implemented method comprising:
receiving, by a network device, a beacon from an endpoint device, the beacon including an estimated position of the endpoint device and a timestamp corresponding to a time when the beacon was transmitted according to a clock of the endpoint device;
comparing, by the network device, the estimated position of the endpoint device contained in the beacon to a position of the network device and comparing, by the network device, the timestamp contained in the beacon to a time according to a clock of the network device;
determining, by the network device, that a first error in the estimated position of the endpoint device is greater than a first threshold value or a second error in the timestamp is greater than a second threshold value; and
sending, by the network device in response to determining that the first error is greater than the first threshold value or the second error is greater than the second threshold value, a response to the beacon with updated position and time information.

13. The computer-implemented method of claim 12, wherein the timestamp contained in the beacon includes an estimated error.

14. The computer-implemented method of claim 13, wherein determining that the second error is greater than the second threshold value includes comparing the estimated error to the second threshold value.

15. The computer-implemented method of any of claims 12 to 14, wherein the beacon is an identifier of the endpoint device.
